# EUROPÄISCHE PATENTSCHRIFT

(11) **EP 2 324 711 B1**
(45) Veröffentlichungstag und Bekanntmachung des Hinweises auf die Patenterteilung: **02.11.2011**
(21) Anmeldenummer: 09014428.8
(22) Anmeldetag: 18.11.2009
(51) Int. Cl.: A21C 9/02, A21C 15/00

(54) **Verfahren zur Herstellung einer länglichen stangenartig ausgebildeten Backware**
Method for producing a longitudinal rod-shaped baked good
Procédé de fabrication d'un produit cuit développé en longueur de type tige

(43) Veröffentlichungstag der Anmeldung: 25.05.2011
(73) Patentinhaber: Griesson - de Beukelaer GmbH & Co. KG, 56751 Polch (DE)
(72) Erfinder: Zydek, Wolfgang, 56626 Andernach (DE); Bode, Günther, 56341 Filsen (DE); Koch, Ingolf, 56154 Boppard (DE)
(74) Vertreter: DR. STARK & PARTNER

(56) Entgegenhaltungen:
- EP-A1- 0 919 129
- CH-A5- 652 566
- US-A- 2 208 900
- US-A- 2 232 832
- US-A- 4 179 865

## Beschreibung

Die Erfindung betrifft ein Verfahren zur Herstellung einer länglichen stangenartig ausgebildeten Backware, wie einen Gebäckstick, aus einem Teig. Bei dem Teig kann es sich beispielsweise um einen Gebäckteig folgender Zusammensetzung handeln:

| | | |
|---|---|---|
| Weizenmehl+Weizenstärke | 55 - 70 | Teile |
| Wasser | 15 - 25 | Teile |
| Zucker | 6 - 10 | Teile |
| Fett | 4 - 8 | Teile |
| Milchzucker | 1 - 2 | Teile |
| Salz | 0,6 - 1 | Teile |
| Ammoniumbicarbonat | 0,08 - 0,18 | Teile |
| Hefe | 0,03 - 0,12 | Teile |

Aus der Praxis sind Verfahren zur Herstellung von länglichen, stangenartig ausgebildeten Backwaren, wie Gebäcksticks, bekannt. Hierbei wird zunächst ein Teigband ausgerollt, aus welchem dann in einem weiteren Arbeitsschritt einzelne Stränge geschnitten werden. Diese werden dann weiter verarbeitet und als endloser Strang in einem Ofen gebacken. Am Ende des Backprozesses werden die endlosen Stränge in einzelne Backwaren gebrochen und in eventuell weiteren Arbeitsschritten weiterverarbeitet. Nachteilig hierbei ist, dass die Stränge immer auf einem Ofen- oder Netzband liegen. Dies führt beim Backen zu einer ungleichmäßigen Bräunung und zum Abdruck des Ofen- oder Netzbands auf dem Gebäck. Ein solches Verfahren wird in US 2 232 832 beschrieben.

Aufgabe der Erfindung ist es, die vorgenannten Nachteile zu vermeiden und ein Verfahren anzugeben, das eine Herstellung einer länglich stangenartig ausgebildeten Backware, wie beispielsweise einen Gebäckstick, mit einer ansprechenden äußeren Oberfläche in jeder beliebigen Form und gleichmäßiger Bräunung ermöglicht, wobei das Verfahren ferner produktschonend sein soll.

Diese Aufgabe wird dadurch gelöst, dass aus dem Teig zumindest ein Strangabschnitt, dessen Länge in etwa der Länge zweier mittels des Verfahrens herzustellender Back-waren entspricht, hergestellt wird, dass der Strangabschnitt über eine Halterung, insbesondere eine Stange, gehangen wird, so dass der Strangabschnitt beidseits herunterhängt, dass jeder Strangabschnitt im herunterhängenden Zustand zumindest einen Backvorgang durchläuft und dass nach dem Backvorgang jeder Strangabschnitt in zwei Backwaren getrennt, insbesondere gebrochen, wird. Bei dem erfindungsgemäßen Verfahren werden die Strangabschnitte über eine Halterung, wie beispielsweise eine Stange, nebeneinander gehangen. Die Strangabschnitte können in diesem hängenden Zustand alle weiteren Prozessabschnitte bis zum Verpackungsschritt durchlaufen, während der jeweilige Bearbeitungsschritt durchgeführt wird. Durch ihr Eigengewicht behalten die Strangabschnitte auch während des Backvorgangs ihre längliche Form, was für die herzustellende Backware von Bedeutung ist, bei.

Dabei kann in etwa in der Mitte wenigstens eines Strangabschnittes zumindest eine quer zur Längserstreckung ausgerichtete Sollbruchstelle eingebracht werden. Diese Sollbruchstelle wird vor dem Backvorgang, vorzugsweise vor dem Überhängen über die Halterung, eingebracht. Die Strangabschnitte können beispielsweise am Ende des Herstellprozesses im noch hängenden Zustand an der Sollbruchstelle, auch Vorbruch genannt, gebrochen werden und fallen dann senkrecht stehend in eine entsprechende Verpackung oder einen entsprechenden Sammelbehälter hinein.

Vorteilhafterweise werden in jeden Strangabschnitt zwei quer zur Längserstreckung ausgerichtete Sollbruchstellen eingebracht, wobei jede Sollbruchstelle in einem solchen Abstand zur Mitte in Längsrichtung des Strangabschnittes gesehen angeordnet ist, der der halben Breite der Berührfläche zwischen dem Strangabschnitt und der Halterung entspricht. Die Sollbruchstellen werden vor dem Backvorgang, vorzugsweise vor dem Überhängen über die Halterung, eingebracht.

Es bietet sich an, wenn mehrere Strangabschnitte aus einem Strang beispielsweise im Rahmen der Online-Herstellung hergestellt werden.

Zumindest ein, insbesondere aus einem Strang geschnittener, Strangabschnitt kann durch Extrusion aus dem Teig hergestellt werden. Der Teig wird kontinuierlich einem Extruder zugeführt. Durch die entsprechende Gestaltung einer Extruderdüse ist es möglich, Backwaren mit runden, rechteckigen, dreieckigen oder jedem beliebigen Querschnitt als endloser Strang kontinuierlich herzustellen.

Jeder Strang und/oder jeder Strangabschnitt kann(können) auf einem Transportband abgelegt werden. Handelt es sich beispielsweise um mehrere von einem Extruder hergestellte Stränge, werden die Stränge in einem definierten Abstand auf dem Transportband abgelegt.

Jeder Strang kann auf dem Transportband, insbesondere durch Schneiden, in mehrere Strangabschnitte getrennt werden.

Das Einbringen der Sollbruchstelle(n), auch Vorbruch genannt, kann auf dem Transportband erfolgen. Die beiden Abschnitte vor und hinter den Sollbruchstellen bilden die eigentlich herzustellenden späteren Backwaren. Der Bereich zwischen den Sollbruchstellen ist technisch bedingt und wird als Rework der Wiederverwendung zugeführt.

Die Backware kann getwistet, nach Art eines Korkenziehers, ausgebildet sein.

Die Backware kann aber auch stabförmig ausgebildet sein und damit eine glatte Oberfläche aufweisen.

Im Folgenden wird in den Zeichnungen ein Ausführungsbeispiel der Erfindung erläutert. Es zeigen:
- Fig. 1: einen Extruder mit drei hergestellten Strän- gen,
- Fig. 2: einen auf einem Transportband abgelegten Strang,
- Fig. 3: eine Seitenansicht eines über eine Halterung herunterhängenden Strangabschnitts,
- Fig. 4: eine schräge Draufsicht auf mehrere über eine Halterung herunterhängende Strangabschnitte,
- Fig. 5: das Eintauchen von über eine Halterung herunterhängenden Strangabschnitten in ein Laugenbad,
- Fig. 6: drei Halterungen mit jeweils mehreren neben- einander angeordneten herunterhängenden Strangabschnitten während des Backvorgangs und
- Fig. 7: das Eintauchen von über eine Halterung herunterhängenden Strangabschnitten in eine Schokolade in einer Überziehanlage.

In allen Figuren werden für gleiche bzw. gleichartige Bauteile übereinstimmende Bezugszeichen verwendet.

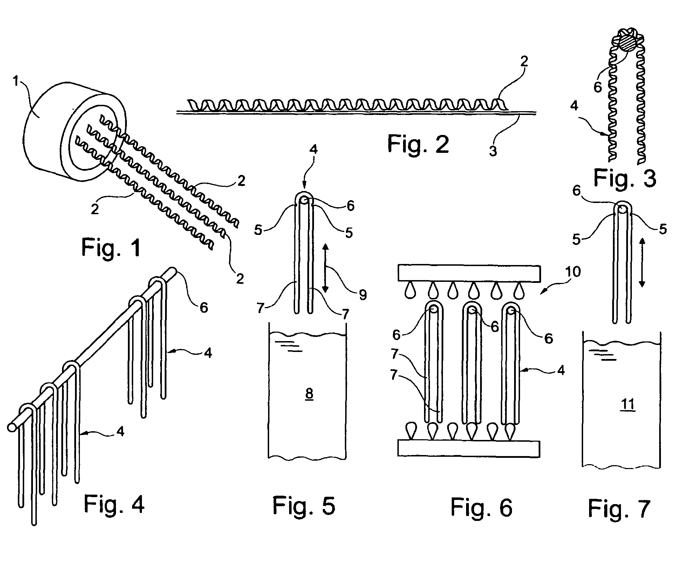

Ein Teig wird kontinuierlich, wie in Fig. 1 dargestellt, einem Extruder 1 mit drei Extruderdüsen zugeführt. Durch die entsprechende Gestaltung der drei Extruderdüsen werden in dem dargestellten Ausführungsbeispiel drei Stränge 2 in getwisteter Ausführung kontinuierlich hergestellt. Bei dem Teig kann es sich beispielsweise um einen Gebäckteig folgender Zusammensetzung handeln:

| | | |
|---|---|---|
| Weizenmehl+Weizenstärke | 55 - 70 | Teile |
| Wasser | 15 - 25 | Teile |
| Zucker | 6 - 10 | Teile |
| Fett | 4 - 8 | Teile |
| Milchzucker | 1 - 2 | Teile |
| Salz | 0,6 - 1 | Teile |
| Ammoniumbicarbonat | 0,08 - 0,18 | Teile |
| Hefe | 0,03 - 0,12 | Teile |

Wie in Fig. 2 erkennbar, werden die drei Stränge 2 auf einem Transportband 3 abgelegt. Hierzu werden die drei Stränge 2 auf dem Transportband 3 gespreizt und damit in einen definierten Abstand zueinander abgelegt. Auf dem Transportband 3 werden die Stränge 2 in einzelne Strangabschnitte 4 geschnitten.

Zusätzlich werden in jeden noch auf dem Transportband 3 liegenden Strangabschnitt 4 zwei Sollbruchstellen 5 eingebracht. Wie den Fig. 5 und 7 zu entnehmen ist, sind die beiden Sollbruchstellen 5 quer zur Längserstreckung des Strangabschnittes 4 ausgerichtet. Jede Sollbruchstelle 5 ist in einem solchen Abstand zur Mitte in Längsrichtung des Strangabschnittes 4 gesehen angeordnet, der etwa der halben Breite der Berührfläche zwischen dem Strangabschnitt 4 und einer als Stange ausgebildeten Halterung 6 entspricht. Die beiden Abschnitte des Strangabschnittes 4 vor und hinter den Sollbruchstellen 5 bilden die eigentlich später hergestellten beiden Backwaren 7. Der Abschnitt zwischen den Sollbruchstellen 5 ist technisch bedingt und wird als Rework der Wiederverwendung zugeführt.

Die Strangabschnitte 4 werden, wie in Fig. 3 dargestellt, nebeneinander über die als Stange ausgebildete Halterung 6 gehangen. Durch das Eigengewicht behalten die Strangabschnitte 4 im Bereich ihrer später hergestellten beiden Backwaren 7 auch während des Backens ihre gerade Form.

In Fig. 4 sind mehrere über die als Stange ausgebildete Halterung 6 herunterhängende Strangabschnitte 4 dargestellt.

In dem dargestellten Verfahrensablauf werden die Strangabschnitte 4 hängend dann einem Laugenbad 8, wie es in Fig. 5 dargestellt ist, zugeführt und mittels Eintauchens in Richtung des Pfeils 9 mit der Lauge in Kontakt gebracht. Selbstverständlich sind auch andere Verfahren, wie beispielsweise mittels Besprühen der Strangabschnitte 4 mit der Lauge, möglich.

Dann werden die Halterungen 6 an einen nicht näher dargestellten Transporteur übergeben, der die als Stangen ausgebildeten Halterungen 6 mit den Strangabschnitten 4 durch einen Ofen 10 führt. Dies ist in Fig. 6 dargestellt. Der Ofen 10 ist lediglich im oberen und unteren Bereich angedeutet. Durch das erfindungsgemäße Verfahren benötigt der Ofen 10 im Gegensatz zu herkömmlichen Herstellverfahren nur eine kurze Baulänge. Zudem bietet das erfindungsgemäße Verfahren die Möglichkeit, die Verwendung von Öfen 10 größerer Höhe, so dass durch die sich daraus ergebende reduzierte Ofenlänge Platz in den Produktionsstätten gespart wird.

In einem nächsten Schritt werden die als Stangen ausgebildeten Halterungen 6 an einen weiteren Transporteur übergeben, der die gebackenen Strangabschnitte 4 durch eine nicht dargestellte Kühleinheit transportiert. Auch hier bietet die Erfindung die Möglichkeit, die Herstellungslinie extrem Platz sparend zu konzipieren und in die Höhe zu bauen. Bei Bedarf kann die Kühleinheit auch gleichzeitig als Konditioniereinheit ausgeführt werden.

Nach dem Kühlen werden die als Stangen ausgebildeten Halterungen 6 mit den gebackenen Strangabschnitten 4 an eine Überziehanlage übergeben. Dies ist in Fig. 7 angedeutet. Hier kommt ein weiterer Vorteil der Erfindung zum Tragen. So müssen bei herkömmlichen Herstellverfahren die Backwaren vor dem Beschichten neu ausgerichtet werden. Sie werden hierzu von einem Halter übernommen, der sie um 90° dreht, damit die Gebäcke im Tauchverfahren beschichtet werden können. Bei dem erfindungsgemäßen Verfahren müssen die an den als Stangen ausgebildeten Halterungen 6 herunterhängenden gebackenen Strangabschnitte 4 nicht neu ausgerichtet werden. Die Strangabschnitte 4 müssen ihre Lage nicht verändern und werden keiner mechanischen Beanspruchung ausgesetzt, die zu einem unbeabsichtigten Bruch führen könnte. Die Strangabschnitte 4 werden - wie beim Eintauchen in die Lauge - im an der als Stange ausgebildeten Halterung hängenden Zustand in die Schokolade 11 eingetaucht. Auch hier sind auch andere Beschichtungsmethoden, beispielsweise mittels Besprühen, möglich.

Anschließend werden die schokolierten Strangabschnitte 4 vorzugsweise einer Kühleinheit zugeführt, damit die Schokolade abkühlen kann.

Die fertig schokolierten Strangabschnitte 4 werden immer noch im an der als Stange ausgebildeten Halterung hängenden Zustand dem Verpackungsvorgang zugeführt. Hier werden die u-förmig ausgebildeten Strangabschnitte 4 an den Sollbruchstellen 5 gebrochen, so dass die beiden Backwaren 7 senkrecht stehend in entsprechende Sammelbehälter fallen. Die Sammelbehälter sind als Formteile ausgeführt, deren Aufnahmevolumen sich nach der gewünschten Packungsgröße richtet. Mittels der Sammelbehälter werden die fertigen Backwaren 7 beispielsweise einem Horizontal- oder Vertikalschlauchbeutel oder jeder beliebig anderen Art einer Verpackung zugeführt.

Neben den bereits erwähnten Vorteilen bietet das erfindungsgemäße Verfahren auch die Möglichkeit, die an den Halterungen 6 herunterhängenden Strangabschnitte 4 in einem geeigneten Speicher einzupuffern, um beispielsweise Störungen im Nachfolgeprozess aufzufangen. Dies ist produktschonend möglich.

## Patentansprüche

1. Verfahren zur Herstellung einer länglichen stangenartig ausgebildeten Backware (7) aus einem Teig, **dadurch gekennzeichnet, dass** aus dem Teig zumindest ein Strangabschnitt (4), dessen Länge in etwa der Länge zweier mittels des Verfahrens herzustellender Backwaren (7) entspricht, hergestellt wird, dass der Strangabschnitt (4) über eine Halterung (6), insbesondere eine Stange, gehangen wird, so dass der Strangabschnitt (4) beidseits herunterhängt, dass jeder Strangabschnitt (4) im herunterhängenden Zustand zumindest einen Backvorgang durchläuft und dass nach dem Backvorgang jeder Strangabschnitt (4) in zwei Backwaren (7) getrennt, insbesondere gebrochen, wird.

2. Verfahren nach dem vorhergehenden Anspruch, **dadurch gekennzeichnet, dass** in etwa in der Mitte wenigstens eines Strangabschnittes (4) zumindest eine quer zur Längserstreckung ausgerichtete Sollbruchstelle (5) eingebracht wird.

3. Verfahren nach einem der vorhergehenden Ansprüche, **dadurch gekennzeichnet, dass** in jeden Strangabschnitt (4) zwei quer zur Längserstreckung ausgerichtete Sollbruchstellen (5) eingebracht werden, wobei jede Sollbruchstelle (5) in einem solchen Abstand zur Mitte des Strangabschnittes (4) angeordnet ist, der der halben Breite der Berührfläche zwischen dem Strangabschnitt (4) und der Halterung (6) entspricht.

4. Verfahren nach einem der vorhergehenden Ansprüche, **dadurch gekennzeichnet, dass** mehrere Strangabschnitte (4) aus einem Strang (2) hergestellt werden.

5. Verfahren nach einem der vorhergehenden Ansprüche, **dadurch gekennzeichnet, dass** zumindest ein, insbesondere aus einem Strang (2) geschnittener, Strangabschnitt (4) durch Extrusion aus dem Teig hergestellt wird.

6. Verfahren nach einem der vorhergehenden Ansprüche, **dadurch gekennzeichnet, dass** jeder Strang (2) und/oder jeder Strangabschnitt (4) auf einem Transportband (3) abgelegt wird.

7. Verfahren nach dem vorhergehenden Anspruch, **dadurch gekennzeichnet, dass** jeder Strang (2) auf dem Transportband (3), insbesondere durch Schneiden, in mehrere Strangabschnitte (4) getrennt wird.

8. Verfahren nach Anspruch 6 oder 7, **dadurch gekennzeichnet, dass** das Einbringen der Sollbruchstelle(n) (5) auf dem Transportband (3) erfolgt.

9. Verfahren nach einem der vorhergehenden Ansprüche, **dadurch gekennzeichnet, dass** die Backware (7) getwistet ausgebildet ist.

10. Verfahren nach einem der vorhergehenden Ansprüche, **dadurch gekennzeichnet, dass** die Backware (7) stabförmig ausgebildet ist.

## Claims

1. Method for producing a longitudinal rod-shaped baked good (7) from a dough, **characterised in that** at least one strand section (4), the length of which approximately corresponds to the length of two baked goods (7) to be produced by using the method, is made from the dough, that the strand section (4) is hung by means of a holder (6), especially a rod, so that the strand section (4) hangs down on both sides, that each strand section (4) hanging down, passes through at least one baking process and that, after the baking process, each strand section (4) is divided, In particular broken, into two baked goods (7).

2. Method according to the preceding claim, **characterised in that**, approximately in the middle of at least one strand section (4), at least one predetermined breaking point (5) is applied across the longitudinal extension.

3. Method according to one of the preceding claims, **characterised in that,** in each strand section (4), two predetermined breaking points (5) are applied across the longitudinal extension, wherein each predetermined breaking point (5) is arranged at such a distance from the middle of the strand section (4) which corresponds to half the width of the contact surface between the strand section (4) and the holder (6).

4. Method according to one of the preceding claims, **characterised in that** several strand sections (4) are produced from one strand (2).

5. Method according to one of the preceding claims, **characterised in that** at least one strand section (4), especially one which Is cut from one strand (2), is produced by extrusion from the dough.

6. Method according to one of the preceding claims, **characterised in that** each strand (2) and/or each strand section (4) is deposited on a transport belt (3).

7. Method according to the preceding claim, **characterised in that** each strand (2) on the transport belt (3) is divided into several strand sections (4), especially by cutting.

8. Method according to claim 6 or 7, **characterised in that** the predetermined breaking point(s) (5) is/are applied on the transport belt (3).

9. Method according to one of the preceding claims, **characterised in that** the baked good (7) is twisted In shape.

10. Method according to one of the preceding claims, **characterised in that** the baked good (7) Is rod-shaped.

## Revendications

1. Procédé de fabrication, à partir d'une pâte, d'un produit cuit (7) allongé de type tige, **caractérisé en ce qu'**on fabrique à partir de la pâte au moins un tronçon de boudin (4) dont la longueur correspond approximativement à la longueur de deux produits cuits (7) à fabriquer au moyen du procédé, **caractérisé en ce qu'**on suspend la tronçon de boudin (4) sur un support (6), en particulier une tige, de sorte que le tronçon de boudin (4) pend des deux côtés, **en ce que** chaque tronçon de boudin pendant (4) subit au moins un processus de cuisson, et **en ce qu'**à la suite du processus de cuisson, chaque tronçon de boudin (4) est séparé, notamment brisé, en deux produits cuits (7).

2. Procédé selon la revendication précédente, **caractérisé en ce qu'**au moins un point de rupture privilégiée (5), orienté transversalement au développement longitudinal, est ménagé approximativement au milieu d'au moins un tronçon de boudin (4).

3. Procédé selon l'une des revendications précédentes, **caractérisé en ce que** deux points de rupture privilégiée (5) orientés transversalement au développement longitudinal sont ménagés dans chaque tronçon de boudin (4), sachant que chaque point de rupture privilégiée (5) est disposé à une distance du milieu du tronçon de boudin (4) qui correspond à la moitié de la largeur de la surface de contact entre le tronçon de boudin (4) et le support (6).

4. Procédé selon l'une des revendications précédentes, **caractérisé en ce qu'**on fabrique plusieurs tronçons de boudin (4) à partir d'un boudin (2).

5. Procédé selon l'une des revendications précédentes, **caractérisé en ce qu'**on fabrique par extrusion à partir de la pâte au moins un tronçon de boudin (4), notamment coupé à partir d'un boudin (2).

6. Procédé selon l'une des revendications précédentes, **caractérisé en ce que** chaque boudin (2) et/ou chaque tronçon de boudin (4) est déposé sur une bande transporteuse (3).

7. Procédé selon la revendication précédente, **caractérisé en ce que** chaque boudin (2) est séparé sur la bande transporteuse (3) en plusieurs tronçons de boudin (4), notamment par coupe.

8. Procédé selon la revendication 6 ou 7, **caractérisé en ce que** la réalisation du ou des points de rupture privilégiée (5) s'effectue sur la bande transporteuse (3).

9. Procédé selon l'une des revendications précédentes, **caractérisé en ce que** le produit cuit (7) est réalisé torsadé.

10. Procédé selon l'une des revendications précédentes, **caractérisé en ce que** le produit cuit (7) est réalisé en forme de bâton.
